# EUROPEAN PATENT SPECIFICATION

(11) **EP 2 711 055 B1**
(45) Date of publication and mention of the grant of the patent: **24.02.2016**
(21) Application number: 13003850.8
(22) Date of filing: 01.08.2013
(51) Int. Cl.: A63B 71/00, B29C 44/56, B32B 3/26, B29C 55/04, B29D 28/00, B29C 55/18, B29D 99/00, B29L 31/52, B29L 31/00

(54) **Protecting and supporting structure and process for producing such structure**
Schutz- und Stützstruktur sowie Herstellungsverfahren einer solchen Struktur
Structure de protection et de support et procédé de production d'une telle structure

(30) Priority: 29.08.2012 IT TO20120747; 16.10.2012 IT TO20120906
(43) Date of publication of application: 26.03.2014
(73) Proprietor: Advanced Distribution S.p.A., 10040 Leini' (Torino) (IT)
(72) Inventor: Gianni, Lanfranco, I-10040 Leini' (TO) (IT)
(74) Representative: Garavelli, Paolo

(56) References cited:
- WO-A1-91/17320
- DE-A1- 2 631 353
- DE-A1- 3 320 346
- US-A- 3 104 875
- US-A- 3 181 849
- US-A- 3 782 724
- US-A- 4 574 101
- US-A1- 2010 259 059

## Description

The present invention refers to an improved protecting and supporting structure and to the process for producing and installing such structure.

Protecting and supporting structures are known, which are made of rubber and similar materials, for example for playgrounds or sports activities, which prevent users from contacting rigid parts which could case traumas and accidents: however, such rubber structures are often insufficient to protect users and are complex and costly to produce, in addition to being heavy and bulky to install.

Document US-A-4574101 discloses a mat comprising a central thick core and two layers of this films, all made of foamed material with closed cells, with the core having a lower density than the films, and the films laminated on the core; the foamed is preferably made of polyethylene and the core can have a single integral layer or multiple layers, and its thickness is four times greater than the combined thickness of the films; the core has a symmetrical configuration of vertical cylindrical chambers containing a trapped area, or air chambers can be formed as horizontal slots in one or both core surfaces; the densities of core and film are preferably 2.5 and 5.0 pounds/foot.

The following documents are the most relevant prior art with respect to the present Application:
- US-A-3 782 724
- US-A-3 104 875
- WO-A1-91/17320
- US-A-3 181 849
- US-A-4 574 101
- DE-A1-33 20 346

Object of the present invention is solving the above prior art problems by providing a protecting and supporting structure which is simple to make, easy to install, has a light weight and a reduced cost, but at the same time provides a protection stiffness which is equal to, if not greater than, the stiffness of similar prior art protecting structures. A further object of the present invention is providing a supporting structure as described above which can be made with a process starting from a single layer, or a plurality of mutually joined layers, and which, through a simple painting step with a special material, allows obtaining the final inventive supporting structure.

The above and other objects and advantages, of the invention, as will appear from the following description, are obtained with a protecting and supporting structure and a process for producing and installing it, as claimed in their respective independent claims. Preferred embodiments and non-trivial variations of the present invention are the subject matter of the dependent claims.

It is intended that the claims are an integral part of the present description.

The present invention will be better described by some preferred embodiments thereof, provided as a non-limiting example, with reference to the enclosed claims, in which:
- Figures 1 to 3 schematically show the production steps of the protecting and supporting structure according to the present invention;
- Figure 4 is a perspective view of an embodiment of the protecting and supporting structure according to the present invention, composed of two overlapped layers, one of which is painted;
- Figure 5 is a perspective view of another embodiment of the protecting and supporting structure according to the present invention, composed of four overlapped layers, one of which is painted;
- Figure 6 is a perspective view of another embodiment of the protecting and supporting structure according to the present invention, composed of a single painted layer, having a different shape with respect to the previous layers;
- Figure 7 is a perspective view of another embodiment of the protecting and supporting structure according to the present invention, similar to the one in Figure 6;
- Figures 8 and 9 are perspective views of two final application solutions of the protecting and supporting structure of Figure 7;
- Figure 10 is a perspective view of a possible practical arrangement of a further embodiment of the protecting and supporting structure according to the present invention; and
- Figure 11 is a partial perspective view of the protecting structure of Figure 10.

With reference to the Figures, preferred embodiments of the improved supporting structure according to the present invention are shown and described. It will be immediately obvious that numerous variations and modifications (for example related to shape, sizes, arrangements and parts with equivalent functionality) could be made to what is described, without departing from the scope of the invention as appears from the enclosed claims.

With reference to the Figures, the improved protecting and supporting structure 1 of the present invention is composed of at least one first elastic supporting layer 3 equipped with recesses 7, 9 and at least one second reinforcing layer 5 with polyurethane-based paint spread onto the first supporting layer 3.

In particular, the first supporting layer 3 can be composed of polystyrene, or polyethylene, or EVA, or polyurethane, or polypropylene.

Instead, in particular, the second reinforcing layer 5 can be composed of polyurethane paint, or polyurea, or hybrid polyurea, or polyurethane.

Moreover, the polyurethane-type paint is composed of a mixture of polyol and isocyanate.

The invention further deals with a process for obtaining a protecting and supporting structure 1 as mentioned above, which can be applied to fixed obstacles. To obtain it, first of all a containing system has been extrapolated for the alveolar support and/or foamed material with various types of polymers.

The types of polymers used according to elasticity, shear resistance and hardness-inertial absorption ratio are divided into three major types: polyurea, hybrid and polyurethane.

The three produces are chemically differentiated as products before their use and physically differentiated after their application. For guards and fixed protections, hybrids have been chosen, since, from prepared recipes, a product has been obtained which sinergically has high elasticity and is tough, resistant to abrasions and shear. Moreover, hybrid polymers can be provided, upon request, with various grades of flame resistance, UV resistance and ageing resistance. The technique for applying the product onto the support is as follows:
- preferably cleaning the supporting layers 3 with eco-compatible diluents and soaps for removing parts made movable by cutting the die-cut element (for alveolar supporting layers 3): these eco-compatible diluents and soaps also operate ad adhesion promoters for the following application due to the epoxy silanes contained therein;
- applying the hybrid polymer, which occurs with a suitable machinery with pneumatic operation, which takes out the two mixture components (already pre-heated in their respective containers) and sends them with pressure (130-150 bar) to a heater which takes the temperature values around 80-85 degrees Celsius, to convey them into a suitable mixing and spraying apparatus, herein conventionally called gun. The gun receives, in two separate chambers, the two components (polyol and isocyanate) which, upon delivery without the presence of air but only with the pressure exerted thereon by the pump, are mixed in the delivery step and, coming mixed onto the piece, give rise to the hybrid polymer (layer 5) which coats the manufactured piece aimed to produce fixed obstacles. The amount of product applied onto the supporting layers 3 with following coats with the above gun even reaches a thickness of 1500 microns. Painting coats are normally made with a crossed system, to provide the layers not only with homogeneity, but also with greater mechanical resistance. Protection sides are covered first, and then the parts that will have to contact the fixed obstacles. After a short rest, the piece is positioned again to proceed with the painting of its visible part, which will thereby obtain a better aesthetic appearance, not being subjected to following painting (fumes);

- after having completed the cross-linking of the applied produce (namely our hybrid polymer), after about 48 hours a product with permanent tech (ecologic product with water base) is applied, which will help the adhesion of the protection onto the support (wall,, fence, etc.). This adhesive is applied with a traditional spraying syste, with a minimum dry film thickness of three hundred microns and, at the end of its drying (about 8 hours), covered with an anti-adhesive film to be protected during its storage, handling and application to the fixed support (not shown);
- also the fixed support on which the protection is applied, is painted with the permanent tech adhesive, with a brush- or roll-type system till a dry film of at least 300 microns is applied. When this will be completely dried (about 5, 6 hours), it will be able to receive the protection previously treated for adhesion.

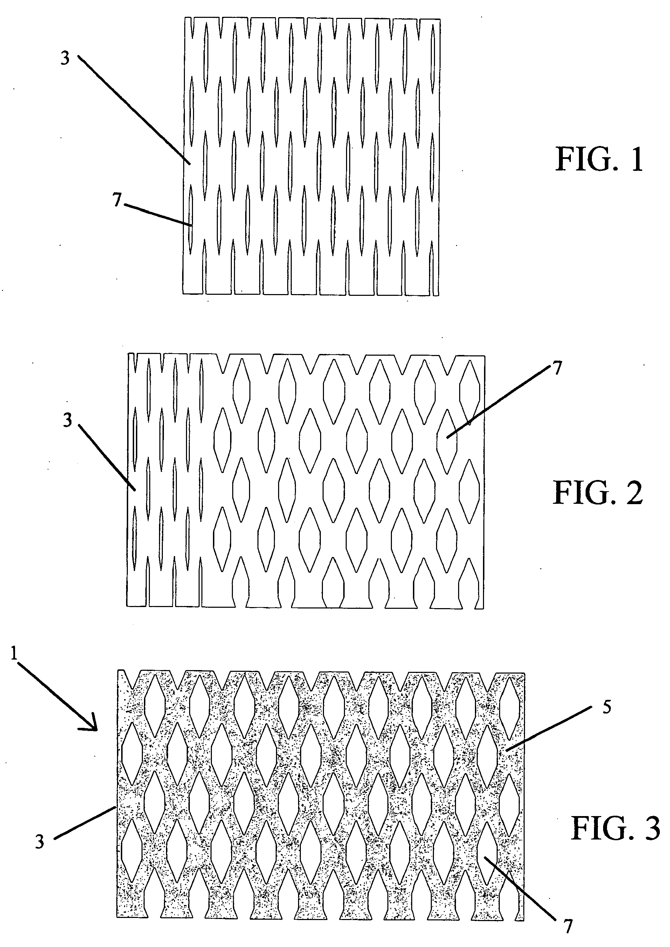

Summarizing, the process of the invention, to produce a protecting and supporting structure 1 composed of at least one first elastic supporting layer 3 equipped with recesses 7, 9 and at least one second reinforcing layer 5 of di polyurethane-based paint spread onto the first supporting layer 3, comprises the main steps of:
- providing a first elastic supporting layer 3;
- obtaining, through cutting or forming, a plurality of recesses 7, 9 on the first elastic supporting layer 3 (Figure 1);
- optionally, passing the first elastic supporting layer 3 between two heated rollers adapted to stretch the first elastic supporting layer 3 enlarging their recesses 7, 9 and fixing the final structure of the first elastic supporting layer 3 through natural cooling when going out of the heated rollers (Figure 2);
- optionally, passing one or more other first elastic supporting layers 3 with recesses 7, 9 obtained therein, together with the first elastic supporting layer 3 between the two heated rollers, in order to mutually join the various supporting layers 3 one above the other, through natural cooling when going out of the heated rollers; and
- spreading the second reinforcing layer 5 of polyurethane-based paint onto the or one of the first elastic supporting layers 3 (Figure 3).

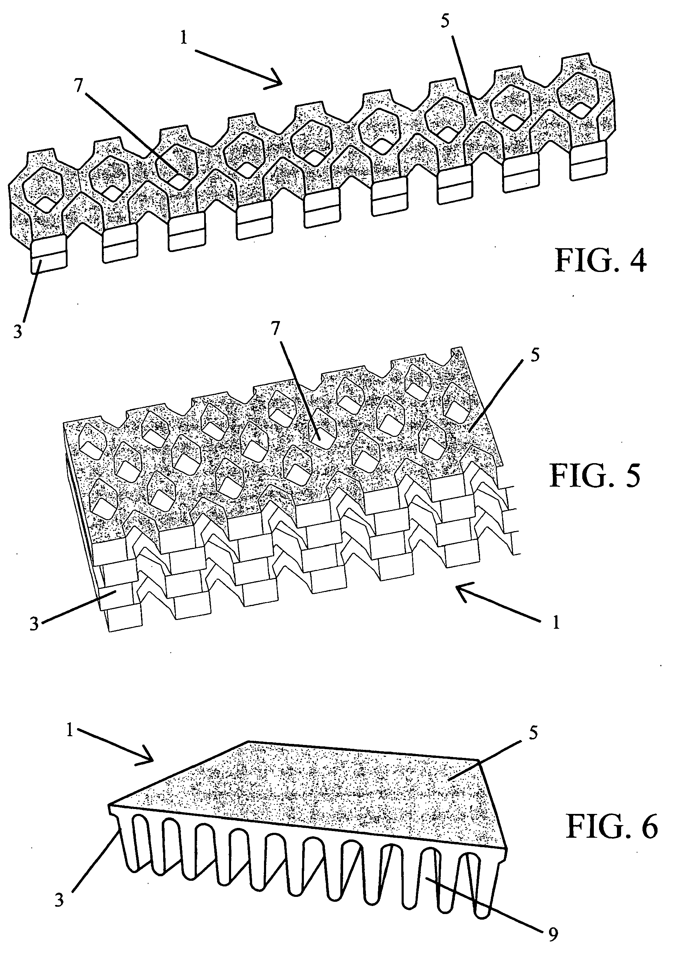

In this way, supporting structures 1 with various arrangements are obtained, as shown for example in Figures 4 to 6 absolutely not in a limiting way, but only as an example of the various possibilities offered by the present invention.

In particular, Figure 4 is a perspective view of an embodiment of the della protecting and supporting structure 1 according to the present invention, composed of two overlapped layers 3, one of which is painted with the layer 5: the two layers 3 are mutually coupled in order to be completely overlapped, providing a structure which obviously is sturdier than the one composed of a single layer 3.

Figure 5, instead, is a perspective view of another embodiment of the protecting and supporting structure 1 according to the present invention, composed of four overlapped layers 3, one of which is painted; moreover, to provide a more distributed protection, the four layers 3 are arranged one above the other in a mutually offset position.

Moreover, Figure 6 is a perspective view of another embodiment of the protecting and supporting structure 1 according to the present invention, composed of a single layer 3 painted with the layer 5, with a different arrangement with respect to the previous ones: in fact, in such layer 3 the recesses 9 have been obtained in longitudinally elongated positions and not passing through with respect to the layer 3: this allows lightening the finale structure 1, keeping it anyway equipped with longitudinal reinforcing ribs (which define the various recesses 9).

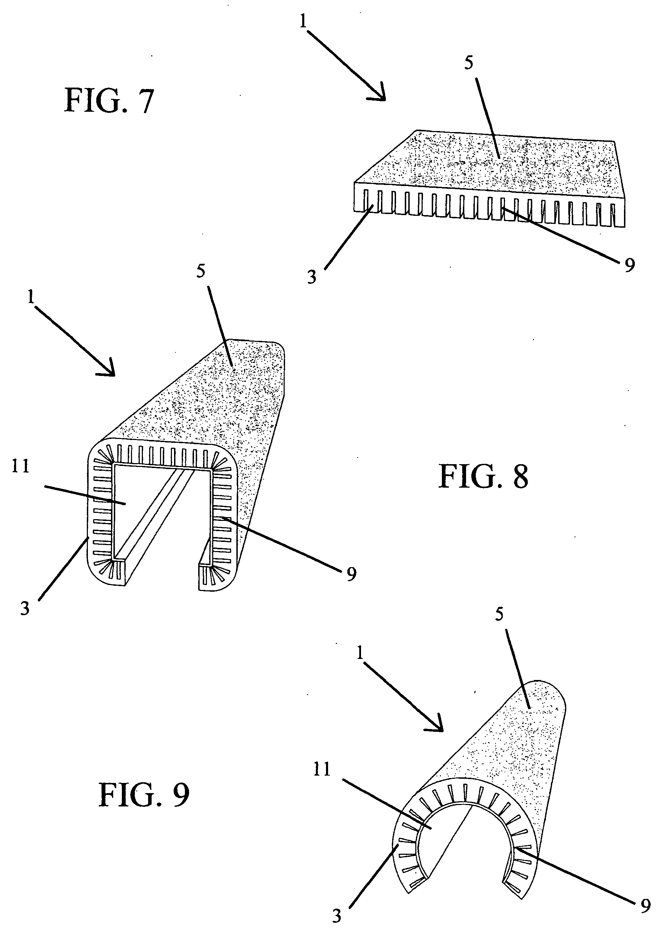

Moreover, Figure 7 is a perspective view of a further embodiment of the protecting and supporting structure 1 according to the present invention, composed of a single layer 3 painted with the layer 5, having a different arrangement with respect to the previous ones: in fact, in such layer 3, the recesses 9 have been obtained in longitudinally elongated positions and not passing through with respect to the layer 3: this allows lightening the finale structure 1, keeping it anyway equipped with longitudinal reinforcing ribs (which define the various recesses 9). In the case shown in Figure 7, moreover, the recesses 9, whose sizes are much lower than the recesses 9 of the embodiment of Figure 6, provide more flexibility to the layer 5, allowing it to be adapted and kept around a supporting element (not shown), usually metallic (like the poles of football goals or supports of any kind), to protect users from impacts against the supporting element itself.

Figures 8 and 9 show a structure 1 adapted to be placed around a supporting element respectively with a quadrangular and circular section, through the contact between the internal wall 11 of the structure 1 and the supporting element: due to its elastic arrangement, the structure 1 can be enlarged in its open part enough to insert it around the supporting element. After its insertion, the structure 1 will perfectly adhere to the supporting element itself, protecting users from impacts against it.

The structure 1 shown in Figures 7 to 9 is prepared in the above mentioned way, painting the layer 3 with the layer 5 and obtaining the transverse recesses 9. After this, the structure 1 is glued onto the internal wall 11, also flexible, but with a higher stiffness than the first supporting layer 3 and the second reinforcing layer 5, in order to provide the complete structure 1 with such operating sturdiness as to allow it to be efficiently applied in the field.

Finally, the complete treatment cycle of the structure 1 and its placement around fixed obstacles can be summarized as:
- washing and priming the alveolar protection and/or foamed material 3;
- applying the chosen polymer 5 at following times;
- completely cross-linking; and
- applying the permanent tech adhesive.

After this, the structure 1 is suitable to be placed around the fixed obstacles to protect, from which it can obviously be removed and re-located at will, according to needs.

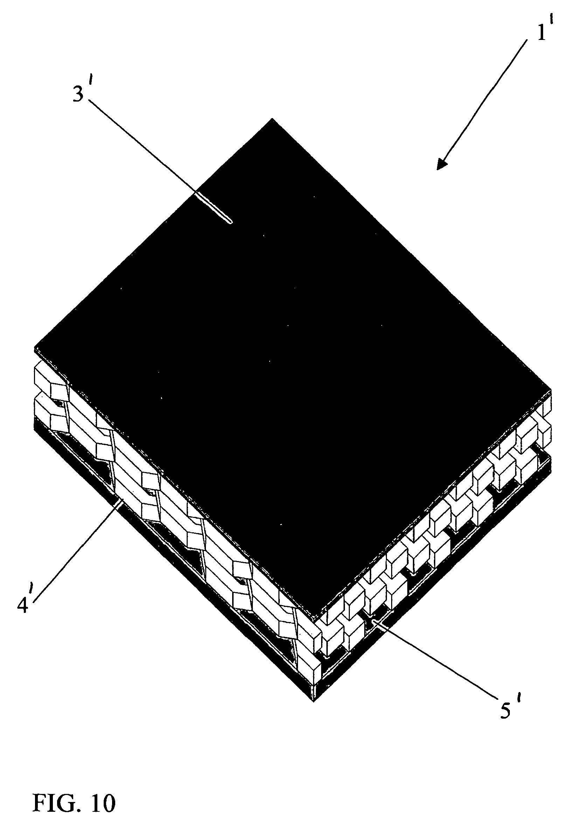

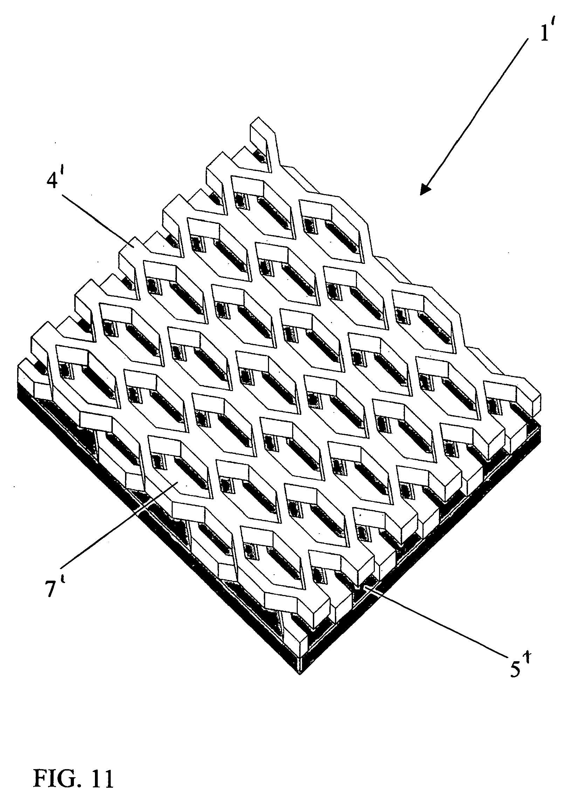

With reference to Figures 10 and 11, according to a preferred variation of the invention, the protecting and supporting structure 1' is composed, in succession of:
- at least one first elastic supporting layer 3', made of foamed material with closed cells deriving from polyolefin resins and having a first density;
- at least one second elastic shock-absorbing layer 4' equipped with recesses 7' made of foamed material with closed cells deriving from polyolefin resins and having the first density; and
- at least one third elastic supporting layer 5' made of foamed material with closed cells deriving from polyolefin resins and having a first density much greater (at least three times greater) than the first density.

In the preferred (but absolutely not limiting) configuration shown, the second elastic shock-absorbing layers 4' are four and are mutually coupled so that their respective recesses 7' are mutually offset axially.

Still in particular, the first and second density range from 25 kilograms per square meter to 200 kilograms per square meter: in this range, the second density is equal to about three times the first density, obviously remaining within the above stated limits.

In the configuration as shown, the first density is equal to 30 kilograms per square meter and the second density is equal to 100 kilograms per square meter.

Still in particular, the foamed material with closed cells deriving from polyolefin resins is cross-linked polyethylene foamed material with closed cells, both chemically and physically.

In a preferred embodiment, the recesses 7' are through-recesses, are shaped substantially as a rhombus and are adapted to enlighten the structure 1' without making it lose its protecting and supporting function, and are adapted to facilitate bending the structure 1' in order to adapt it to shapes of objects around which it will be placed.

Always in such preferred embodiment, the first elastic supporting layer 3' has a thickness of 1 cm, the second elastic shock-absorbing layer 4' has a thickness of 1 cm and the third elastic supporting layer 5' has a thickness of 0.4 cm.

The invention further relates to a process for producing a protecting and supporting structure 1' like the previously described one. Such process substantially comprises the steps of:
- providing a first elastic supporting layer 3';
- obtaining, through cutting or forming, a plurality of recesses 7' on the second elastic shock-absorbing layer 4';
- hot-stretching the second elastic shock-absorbing layer 4' enlarging its recesses 7' and fixing the final structure of the first elastic supporting layer 3' through natural cooling at the end of the hot stretching step; and
- mutually coupling the first elastic supporting layer 3', the second elastic shock-absorbing layer 4' and the third elastic supporting layer 5' through mutual hot melting of the layers 3', 4', 5' one over the other, fixing la final protecting and supporting structure 1' through natural cooling at the end of the hot coupling step.

If the second elastic shock-absorbing layers 4' are more than one, the inventive process further comprises, after the hot-stretching step of each elastic shock-absorbing layer 4', the step of mutually coupling the various elastic shock-absorbing layers 4' through a mutual hot melting of the layers 4' one over the other, keeping axially offset the recesses 7' of each layer with respect to the corresponding recesses 7' of the adjacent layers 4', and fixing the provided assembly of elastic shock-absorbing layers 4', through natural cooling at the end of their hot coupling.

The inventive process can further comprise the step of initially cleaning the supporting layers 3', 5' with eco-compatible diluents and soaps to remove the parts made moving by cutting the die-cut element, for the alveolar supporting layers 3', 5', wherein such eco-compatible diluents and soaps also operate as adhesion promoters for the following application, due to the epoxy silanes contained therein.

After this, the structure 1' is suitable to be placed around the fixed obstacle to be protected, from which it can obviously be removed and re-located at will, according to needs.

## Claims

1. Structure (1') suitable for protecting and supporting, **characterised in that** it is composed, in succession, of:
- at least one first elastic supporting layer (3'), made of foamed material with closed cells deriving from polyolefin resins and having a first density;
- at least one second elastic shock-absorbing layer (4') equipped with recesses (7') made of foamed material with closed cells deriving from polyolefin resins and having the first density; and
- at least one third elastic supporting layer (5') made of foamed material with closed cells deriving from polyolefin resins and having a second density equal to about three times said first density.

2. Structure (1') according to claim 1, **characterised in that** the second elastic shock-absorbing layers (4') are four and are mutually coupled so that their respective recesses (7') are mutually offset axially.

3. Structure (1') according to claim 1 or 2, **characterised in that** said first and second density range from 25 kilograms per square meter to 200 kilograms per square meter, said second density being equal to about three times said first density.

4. Structure (1') according to claim 3, **characterised in that** said first density is equal to 30 kilograms per square meter and said second density is equal to 100 kilograms per square meter.

5. Structure (1') according to any one of the previous claims, **characterised in that** said foamed material with closed cells deriving from polyolefin resins is a cross-linked polyethylene foamed material with closed cells, both chemically and physically.

6. Structure (1') according to any one of the previous claims, **characterised in that** the recesses (7') are through-recesses, are shaped substantially as a rhombus and are adapted to enlighten the structure (1') without making it lose its protecting and supporting function, and are adapted to facilitate bending the structure (1') to adapt it to shapes of objects to be protected and supported.

7. Structure (1') according to any one of the previous claims, **characterised in that** said first elastic supporting layer (3') has a thickness of 1 cm, said second elastic shock-absorbing layer (4') has a thickness of 1 cm and said third elastic supporting layer (5') has a thickness of 0.4 cm.

8. Process for producing a structure (1) suitable for protecting and supporting, composed of at least one first elastic supporting layer (3) equipped with recesses (7, 9) and at least one second reinforcing layer (5) of polyurethane-based paint spread onto the first supporting layer (3), said process comprising the steps of:
- providing a first elastic supporting layer (3);
- obtaining, through cutting or forming, a plurality of recesses (7, 9) on the first elastic supporting layer (3);
- passing the first elastic supporting layer (3) between two heated rollers adapted to stretch the first elastic supporting layer (3) enlarging its recesses (7, 9) and fixing the final structure of the first elastic supporting layer (3) through natural cooling when going out of the heated rollers;
- optionally, passing one or more other first elastic supporting layers (3) with recesses (7, 9) obtained therein, together with the first elastic supporting layer (3) between the two heated rollers, in order to mutually join the various supporting layers (3) one above the other, through natural cooling when going out of the heated rollers; and
- spreading the second reinforcing layer (5) of polyurethane-based paint onto the or one of the first elastic supporting layers (3).

9. Process according to claim 8, further comprising the step of initially cleaning the supporting layers (3) with eco-compatible diluents and soaps to remove the parts made moving by cutting the die-cut element, for the alveolar supporting layers (3), wherein such eco-compatible diluents and soaps also operate as adhesion promoters for the following application, due to the epoxy silanes contained therein.

10. Process for producing a structure (1') suitable for protecting and supporting, composed of at least one first elastic supporting layer (3'), made of foamed material with closed cells deriving from polyolefin resins and having a first density; at least one second elastic shock-absorbing layer (4') equipped with recesses (7) made of foamed material with closed cells deriving from polyolefin resins and having the first density; and at least one third elastic supporting layer (5') made of foamed material with closed cells deriving from polyolefin resins and having a second density equal to about three times said first density, said process comprising the steps of:
- providing a first elastic supporting layer (3');
- obtaining, through cutting or forming, a plurality of recesses (7') on the second elastic shock-absorbing layer (4');
- hot-stretching the second elastic shock-absorbing layer (4') enlarging its recesses (7') and fixing the final structure of the first elastic supporting layer (3') through natural cooling at the end of the hot-stretching step; and
- mutually coupling the first elastic supporting layer (3'), the second elastic shock-absorbing layer (4') and the third elastic supporting layer (5') through mutual hot melting of the layers (3', 4', 5') one over the other, fixing the final protecting and supporting structure (1') through natural cooling at the end of the hot coupling step.

11. Process according to claim 10, further comprising, if the second elastic shock-absorbing layers (4') are more than one, after the step of hot-stretching each elastic shock-absorbing layer (4'), the step of mutually coupling the various elastic shock-absorbing layers (4') through mutual hot melting of the layers (4') one over the other, keeping axially offset the recesses (7') of each layer with respect to the corresponding recesses (7') of the adjacent layers (4'), and fixing the provided assembly of elastic shock-absorbing layers (4'), through natural cooling at the end of the hot coupling step.

12. Process according to claim 10 or 11, further comprising the step of initially cleaning the supporting layers (3', 5') with eco-compatible diluents and soaps to remove the parts made moving by cutting the die-cut element, for the alveolar supporting layers (3', 5'), wherein such eco-compatible diluents and soaps also operate as adhesion promoters for the following application, due to the epoxy silanes contained therein.

## Patentansprüche

1. Schutz- und Stützstruktur (1'), die **dadurch gekennzeichnet** ist, aus folgenden aufeinander folgenden Elementen zu bestehen:
- mindestens einer ersten elastischen Stützschicht (3'), die aus geschlossenzelligem Material aus Polyolephinharzen hergestellt wird und eine erste Dichte hat;
- mindestens einer zweiten elastischen Dämpfungsschicht (4'), die mit einem Hohlraum (7') aus geschlossenzelligem Material aus Polyolephinharzen hergestellt wird und die erste Dichte hat; und
- mindestens einer dritten elastischen Stützschicht (5'), die aus geschlossenzelligem Material aus Polyolephinharzen hergestellt wird und eine zweite Dichte hat, die etwa drei Mal dichter als die erste Dichte ist.

2. Struktur (1') gemäß Patentanspruch 1, die **dadurch gekennzeichnet ist, dass** die zweiten elastischen Dämpfungsschichten (4') vier sind und miteinander verbunden sind, sodass die entsprechenden Hohlräume (7') in axialer Richtung zueinander verschoben sind.

3. Struktur (1') gemäß Patentanspruch 1 oder 2, die **dadurch gekennzeichnet ist, dass** die genannte erste und zweite Dichte von 25 Kilogramm je Kubikmeter bis zu 200 Kilogramm je Kubikmeter variieren, die genannte zweite Dichte ist etwa drei Mal dichter als die erste Dichte.

4. Struktur (1') gemäß Patentanspruch 3, die **dadurch gekennzeichnet ist, dass** die genannte erste Dichte 30 Kilogramm je Kubikmeter entspricht und dass die genannte zweite Dichte 100 Kilogramm je Kubikmeter entspricht.

5. Struktur (1') gemäß einem beliebigen der vorhergehenden Patentansprüche, die **dadurch gekennzeichnet ist, dass** das genannte geschlossenzellige Material aus Polyolephinharzen sowohl chemisch als auch physikalisch geschlossenzelliger vernetzter Schaumstoff ist.

6. Struktur (1') gemäß einem der vorhergehenden Patentansprüche, die **dadurch gekennzeichnet ist, dass** die Hohlräume (7') durchgehend und grundlegend rautenförmig sind und dazu dienen, die Struktur (1') zu erleichtern, ohne dass diese ihre Schutz- und Stützfunktion verliert, und dass sie dazu dienen, das Umbiegen der Struktur (1') zu vereinfachen, um sie an die Formen der zu schützenden und zu stützenden Gegenstände anzupassen.

7. Struktur (1') gemäß einem beliebigen der vorhergehenden Patentansprüche, die **dadurch gekennzeichnet ist, dass** die genannte erste elastische Stützschicht (3') eine Stärke von 1 cm, die genannte zweite elastische Dämpfungsschicht (4') eine Stärke von 1 cm und die genannte dritte elastische Stützschicht (5') eine Stärke von 0,4 cm hat.

8. Verfahren für die Herstellung einer Schutz- und Stützstruktur (1), die aus mindestens einer ersten elastischen Stützschicht (3) besteht, die mit einem Hohlraum (7, 9) ausgestattet ist, und aus mindestens einer zweiten Verstärkungsschicht (5) aus Lack auf Polyurethanbasis besteht, der auf die erste Stützschicht (3) aufgetragen wird, das genannte Verfahren schließt folgende Phasen ein:
- Eine erste elastische Stützschicht (3) vorsehen;
- Durch Schnitt und Formierung mehrere Hohlräume (7, 9) an der ersten elastischen Stützschicht (3) erhalten;
- Die erste elastische Stützschicht (3) durch zwei erhitzte Walzen führen, die dazu dienen, die erste elastische Stützschicht (3) zu verstrecken und ihre Hohlräume (7, 9) zu erweitern, und die Abschlussstruktur der ersten elastischen Stützschicht (3) durch natürliche Abkühlung am Auslauf der erhitzten Walzen befestigen;
- Je nach Wunsch eine oder mehrere weitere erste elastische Stützschichten (3) mit in diesen erhaltenen Hohlräumen (7, 9) zusammen mit der ersten elastischen Stützschicht (3) zwischen den beiden erhitzten Walzen durchführen, um die verschiedenen Stützschichten (3) durch natürliche Abkühlung am Auslauf der erhitzten Walzen aufeinander zu verbinden; und
- auf der zweiten Verstärkungsschicht (5) Lack auf Polyurethanbasis auf die erste oder die ersten elastischen Stützschichten (3)auftragen.

9. Verfahren gemäß Patentanspruch 8, das außerdem die anfängliche Reinigungsphase der Stützschichten (3) mit Verdünnern und umweltverträglichen Seifen zur Entfernung der Teile einschließt, die durch den Schnitt des Formstücks beweglich gemacht wurden, für die alveolaren Stützschichten (3), in denen solche Verdünner und umweltverträglichen Seifen durch die in diesen enthaltenen Epoxysilane auch als Haftvermittler für die nachfolgende Anwendung wirken.

10. Verfahren für die Herstellung einer Schutz- und Stützstruktur (1'), die aus mindestens einer ersten elastischen Stützschicht (3') besteht, die aus geschlossenzelligem Material aus Polyolephinharzen hergestellt wird und eine erste Dichte hat; mindestens einer zweiten elastischen Dämpfungsschicht (4'), die mit einem Hohlraum (7') aus geschlossenzelligem Material aus Polyolephinharzen hergestellt wird und die erste Dichte hat; und mindestens einer dritten elastischen Stützschicht (5'), die aus geschlossenzelligem Material aus Polyolephinharzen hergestellt wird und eine zweite Dichte hat, die etwa drei Mal dichter als die erste Dichte ist, das genannte Verfahren schließt folgende Phasen ein:
- Eine erste elastische Stützschicht (3') vorsehen;
- Durch Schnitt und Formierung mehrere Hohlräume (7') an der zweiten elastischen Dämpfungsschicht (4') erhalten;
- Die zweite elastische Dämpfungsschicht (4') heiß verstrecken, und ihre Hohlräume (7') erweitern, und die Abschlussstruktur der ersten elastischen Stützschicht (3') durch natürliche Abkühlung am Ende der Heißverstreckung befestigen; und
- Die erste elastische Stützschicht (3'), die zweite elastische Dämpfungsschicht (4') und die dritte elastische Stützschicht (5') durch Heißverschmelzung der Schichten (3', 4', 5') aufeinander verbinden, die abschließende Schutz- und Stützstruktur (1') durch natürliche Abkühlung am Ende der Heißverbindung befestigen.

11. Verfahren gemäß Patentanspruch 10, das außerdem, falls die zweiten elastischen Dämpfungsschichten (4') mehr als eine sind, nach der Heißverstreckungsphase jeder elastischen Dämpfungsschicht (4') die Verbindungsphase der verschiedenen Dämpfungsphasen (4') miteinander durch Heißverschmelzung der Schichten (4') aufeinander einschließt, wobei die Hohlräume (7') jeder Schicht gegenüber den entsprechenden Hohlräumen (7') der daneben liegenden Schichten (4') verschoben behalten werden, und die vorgesehene Gruppe der elastischen Dämpfungsschichten (4') durch natürliche Abkühlung am Ende der Heißverbindung befestigt wird.

12. Verfahren gemäß Patentanspruch 10 oder 11, das außerdem die anfängliche Reinigungsphase der Stützschichten (3', 5') mit Verdünnern und umweltverträglichen Seifen zur Entfernung der Teile einschließt, die durch den Schnitt des Formstücks beweglich gemacht wurden, für die alveolaren Stützschichten (3', 5'), in denen solche Verdünner und umweltverträglichen Seifen durch die in diesen enthaltenen Epoxysilane auch als Haftvermittler für die nachfolgende Anwendung wirken.

## Revendications

1. Structure (1') appropriée à la protection et au support, **caractérisée par** le fait d'être composée, en succession, par :
- au moins une première couche élastique de support (3'), réalisée en matériau expansé à cellule fermée dérivant de résines polyoléfiniques et ayant une première densité ;
- au moins une seconde couche élastique d'amortissement (4') dotée de cavités (7') réalisée en matériau expansé à cellule fermée dérivant de résines polyoléfiniques et ayant la première densité ; et
- au moins une troisième couche élastique de support (5') réalisée en matériau expansé à cellule fermée dérivant de résines polyoléfiniques et ayant une seconde densité égale à environ trois fois la première densité susmentionnée.

2. Structure (1') selon la revendication 1, **caractérisée en ce que** les secondes couches élastiques d'amortissement (4') sont au nombre de quatre et sont accouplées entre elles de sorte que les cavités respectives (7') soient réciproquement décalées dans le sens axial.

3. Structure (1') selon la revendication 1 ou 2, **caractérisée en ce que** la première et la seconde densité varient de 25 kilogrammes au mètre cube à 200 kilogrammes au mètre cube, la seconde densité est égale à environ trois fois la première densité.

4. Structure (1') selon la revendication 3, **caractérisée en ce que** la première densité est égale à 30 kilogrammes au mètre cube et la seconde densité est égale à 100 kilogrammes au mètre cube.

5. Structure (1') selon l'une des revendications précédentes, **caractérisée en ce que** le matériau expansé à cellule fermée dérivant de résines polyoléfiniques est un polyéthylène expansé réticulé à cellule fermée, aussi bien chimiquement que physiquement.

6. Structure (1') selon l'une des revendications précédentes, **caractérisée en ce que** les cavités (7') sont passantes, de forme substantiellement en losange et servent à alléger la structure (1') sans que celle-ci perde sa fonction de protection et de support mais également à faciliter le pliage de la structure (1') pour l'adapter aux formes des objets à protéger et à supporter.

7. Structure (1') selon l'une des revendications précédentes, **caractérisée en ce que** la première couche élastique de support (3') a une épaisseur de 1 cm, la seconde couche d'amortissement (4') a une épaisseur de 1 cm et la troisième couche élastique de support (5') a une épaisseur de 0,4 cm.

8. Procédure pour produire une structure (1) appropriée à la protection et au support, composée au moins d'une première couche élastique de support (3) dotée de cavités (7, 9) et au moins une seconde couche de renfort (5) de vernis de polyuréthane étalé sur la première couche de support (3), cette procédure comprend les phases suivantes :
- prévoir une première couche élastique de support (3) ;
- obtenir, à travers la coupe ou le formage, une pluralité de cavités (7, 9) sur la première couche élastique de support (3) ;
- faire passer la première couche élastique de support (3) entre deux rouleaux chauffés servant à étirer la première couche élastique de support (3) pour élargir ses cavités (7, 9) et fixer la structure finale de la première couche élastique de support (3) à travers le refroidissement naturel à la sortie des rouleaux chauffés ;
- au choix, faire passer une ou plusieurs couches élastiques de support (3) dotées de cavités (7, 9) obtenues sur celles-ci, avec la première couche élastique de support (3) entre les deux rouleaux chauffés, de sorte à unir entre elles les différentes couches de support (3) l'une sur l'autre, à travers le refroidissement naturel à la sortie des rouleaux chauffés ; et
- étaler la seconde couche de renfort (5) de vernis de polyuréthane sur la couche ou sur l'une des premières couches élastiques de support (3).

9. Procédure selon la revendication 8, comprenant en outre la phase de nettoyage initial des couches de support (3) avec des diluants et des savons éco-compatibles pour éliminer les parties rendues mobiles par le cisaillement de la pièce moulée, pour les couches de support (3) alvéolaires, où ces diluants et savons éco-compatibles agissent comme promoteurs d'adhésion pour l'application suivante grâce aux époxy silanes qu'ils contiennent.

10. Procédure pour produire une structure (1') appropriée à la protection et au support, composée au moins d'une première couche élastique de support (3'), réalisée en matériau expansé à cellule fermée dérivant de résines polyoléfiniques et ayant une première densité ; au moins une seconde couche élastique d'amortissement (4') dotée de cavités (7') réalisée en matériau expansé à cellule fermée dérivant de résines polyoléfiniques et ayant la première densité ; et au moins une troisième couche élastique de support (5') réalisée en matériau expansé à cellule fermée dérivant de résines polyoléfiniques et ayant une seconde densité égale à trois fois la première densité, cette procédure comprend les phases suivantes :
- prévoir une première couche élastique de support (3') ;
- obtenir, à travers la coupe ou le formage, une pluralité de cavités (7') sur la seconde couche élastique d'amortissement (4') ;
- étirer à chaud la seconde couche élastique d'amortissement (4') pour élargir ses cavités (7') et fixer la structure finale de la première couche élastique de support (3') à travers le refroidissement naturel au terme de l'étirage à chaud; et
- accoupler entre elles la première couche élastique de support (3'), la seconde couche élastique d'amortissement (4') et la troisième couche élastique de support (5') à travers la fusion à chaud réciproque des couches (3', 4', 5') l'une sur l'autre, en fixant la structure finale de protection et de support (1') à travers le refroidissement naturel au terme de l'étirage à chaud.

11. Procédure selon la revendication 10, comprenant par ailleurs, au cas où il y aurait plusieurs secondes couches élastiques d'amortissement (4'), après la phase d'étirage à chaud de chaque couche élastique d'amortissement (4'), une phase d'accouplement entre les différentes couches élastiques d'amortissement (4') par fusion à chaud réciproque des couches (4') l'une sur l'autre, en maintenant décalées dans le sens axial les cavités (7') de chaque couche par rapport aux cavités correspondantes (7') des couches (4') adjacentes, et fixer l'ensemble des couches élastiques d'amortissement (4') prévu à travers le refroidissement naturel au terme de l'accouplement à chaud.

12. Procédure selon la revendication 10 ou 11, comprenant en outre la phase de nettoyage initial des couches de support (3', 5') avec des diluants et savons éco-compatibles pour éliminer les parties rendues mobiles par le cisaillement de la pièce moulée, pour les couches de support (3', 5') alvéolaires, où ces diluants et savons éco-compatibles agissent comme promoteurs d'adhésion pour l'application suivante grâce aux époxy silanes qu'ils contiennent.
